# EUROPEAN PATENT SPECIFICATION

(11) **EP 3 719 693 B1**
(45) Date of publication and mention of the grant of the patent: **15.01.2025**
(21) Application number: 18883316.4
(22) Date of filing: 14.11.2018
(51) Int. Cl.: G06V 40/13

(54) **DISPLAY MODULE AND MOBILE TERMINAL**
ANZEIGEMODUL UND MOBILES ENDGERÄT
MODULE D'AFFICHAGE ET TERMINAL MOBILE

(30) Priority: 30.11.2017 CN 201711243216
(43) Date of publication of application: 07.10.2020
(73) Proprietor: Vivo Mobile Communication Co., Ltd., Dongguan, Guangdong 523860 (CN)
(72) Inventor: ZHANG, Kaokao, Dongguan, Guangdong 523860 (CN)
(74) Representative: Conti, Marco
(86) International application number: PCT/CN2018/115398
(87) International publication number: WO 2019/105228

(56) References cited:
- EP-A1- 2 204 792
- CN-A- 106 203 408
- CN-A- 107 145 856
- CN-A- 107 168 465
- CN-A- 108 288 018
- CN-U- 206 282 055
- US-A1- 2011 267 298
- US-A1- 2017 068 365

## Description

### TECHNICAL FIELD

The present disclosure relates to the field of mobile terminal technology, in particular to a display module and a mobile terminal.

### BACKGROUND

With the introduction of full-screen phones, mobile terminal displays can be further enlarged without changing the phone dimensions. To meet the requirement for a high screen-to-body ratio, the bottom bezel of mobile terminal display is removed; therefore the front-facing fingerprint recognition module formerly designed to be located at the bottom bezel cannot be kept at the same place and has to be moved to another place.

In the related art, there are two design schemes for fingerprint recognition module in mobile terminals with a high screen-to-body ratio: scheme 1, the fingerprint recognition module is arranged in the backside or side bezel of the mobile terminal; scheme 2: a fingerprint recognition area is defined on the screen, and the fingerprint recognition module is disposed underneath this fingerprint recognition area, wherein the fingerprint recognition module and the fingerprint recognition area are of the same size.

However, in scheme 1, performing fingerprint recognition at the backside or side bezel of a mobile terminal goes against the principle of ergonomics, causing poor user experience with regard to fingerprint recognition. While in scheme 2, fingerprint recognition can only be done at a fixed area on the screen, which cannot meet the requirement for full-screen fingerprint recognition in a high screen-to-body ratio mobile terminal.

US 2017/068365 A1 relates to a touch display apparatus capable of fingerprint recognition, which includes a display panel, a cover plate, a touch sensing electrode set and a fingerprint recognition electrode set.

US 2011/267298 A1 relates to a fingerprint sensor which includes a conductive layer incorporatable within an electronic display.

CN 206282055U discloses a liquid crystal display module.

EP 2204792A1 provides a method and device for controlling power of an active matrix organic light-emitting diode.

### SUMMARY

According to a first aspect of the present disclosure, a display module is provided according to claim 1.

Furthermore, a mobile terminal is provided, which includes a display module provided in the first aspect of the present disclosure.

### BRIEF DESCRIPTION OF THE DRAWINGS

The following briefly describes the accompanying drawings to be used in the description of the embodiments of the present disclosure, so as to elaborate the technical solutions more clearly. It is apparent the drawings in the following description are merely a part of the embodiments of the present disclosure. A person of ordinary skill in the art may obtain other drawings based on the drawings of the present disclosure without creative efforts.
Fig.1 is a schematic structural diagram of a display module provided by the present disclosure;
Fig.2 is a schematic diagram of an operation of a display module provided by some embodiments of the present disclosure;
Fig.3 is a schematic structural diagram of a sensitive surface of an optical fingerprint sensitive layer provided by some embodiments of the present disclosure;
Fig.4 is another schematic structural diagram of a display module provided by some embodiments of the present disclosure.

### DETAILED DESCRIPTION

The following describes clearly and completely the technical solutions according to the embodiments of the present disclosure with reference to the accompanying drawings in the embodiments of the present disclosure. It is apparent the embodiments in the following description are merely a part rather than all of the embodiments of the present disclosure. All other embodiments obtained by a person of ordinary skill in the art based on the embodiments of the present disclosure without creative efforts shall fall within the scope of the present disclosure.

The present disclosure provides a display module and a mobile terminal, to solve the problems in the related art that the requirement for full-screen fingerprint recognition in a high screen-to-body ratio mobile terminal cannot be met and poor user experience is caused.

Hereinafter, the display module and the mobile terminal provided in the present disclosure are explained in details with reference to several specific embodiments.

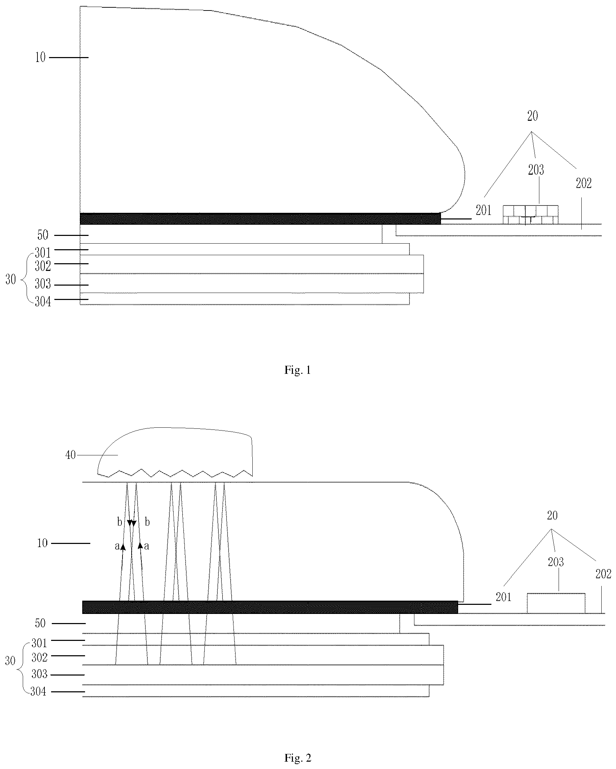

Fig.1 depicts a schematic structural diagram of a display module provided in the present disclosure. The display module includes: a screen cover plate 10, a fingerprint sensitive component 20, and a display component 30; the fingerprint sensitive component 20 is arranged between the screen cover plate 10 and the display component 30; the fingerprint sensitive component 20 includes an optical fingerprint sensitive layer 201 which is made of a transparent conductive material, and a sensitive surface of the optical fingerprint sensitive layer includes a plurality of pixels; a sensitive surface of the optical fingerprint sensitive layer 201 is attached to a surface of the screen cover plate 10, a attaching surface of the optical fingerprint sensitive layer 201 is attached to a display surface of the display component 30.

In some embodiments of the present disclosure, the application scenarios of the display component 30 of the display module include but are not limited to active-matrix organic light emitting diode (AMOLED) displays and thin film transistor (TFT) displays. The largest difference between a TFT display and an AMOLED display is that the latter does not have a backlight panel.

Furthermore, the screen cover plate 10 can be made of glass or organic material, and may have a 2.5D/3D curved edge or a 2D flat edge. The embodiments of the disclosure do not set limits in this regard. The purpose of the screen cover plate 10 is to protect the fingerprint sensitive component 20 and the display component 30. Meanwhile, the images of the display component 30 are visible through the screen cover plate 10 as the screen cover plate 10 is transparent. In addition, the optical fingerprint sensitive layer 201 is made of a transparent conductive materials with good transmittance; and the sensitive surface of the optical fingerprint sensitive layer 201 includes a plurality of pixels arranged according to a preset rule, which are able to receive light and determine an amount of light. Therefore, when a finger is pressed on the screen cover plate 10, the light emitted by the display component 30 may impinge on the finger on the screen cover plate 10 and be reflected back to the pixels on the optical fingerprint sensitive layer 201.

Specifically, referring to Fig.2, when the display component 30 is on, if a finger 40 is pressed on the screen cover plate 10 and the mobile terminal is performing a fingerprint verification operation, the light emitted by the display component 30 passes through the fingerprint sensitive component 20 towards the screen cover plate 10 in a direction *a*, and part of the light is reflected by the finger on the screen cover plate 10 to the sensitive surface of the optical fingerprint sensitive layer 201 in a direction b. A pattern of the fingerprint corresponding to the finger 40 is calculated by the fingerprint sensitive component 20 based on a difference of the amount of light received by the pixels and a preset amount of light. It should be noted that, to perform the fingerprint identification, the display component 30 must be on, i.e., the screen of mobile terminal is activated, otherwise, the screen must be activated before the verification can be performed.

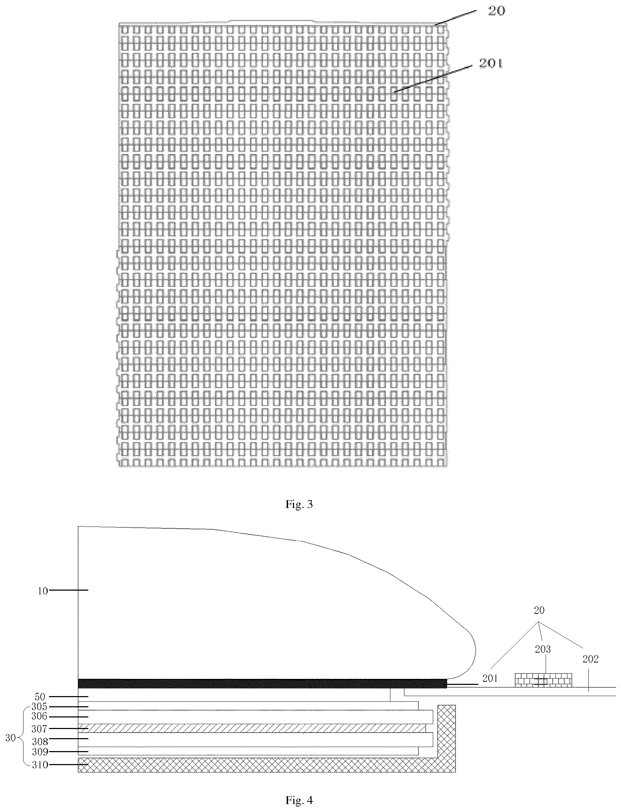

Additionally, Fig.3 depicts a schematic structural diagram of the sensitive surface of an optical fingerprint sensitive layer provided in the present disclosure. A pattern of the sensitive surface of the optical fingerprint sensitive layer 201 is made of a transparent conductive material, such as an indium-tin-oxide material, and a manufacture principle thereof is similar to that of pixels in a display screen, i.e., a plurality of pixels 2011 are manufactured on the entire sensitive surface of the optical fingerprint sensitive layer 201 and each pixel 2011 is used to collect the light at a corresponding position. The pattern design may not be confined to that in Fig.3, but suits the actual needs of applications. When a fingerprint verification is performed on the mobile terminal, part of the light is reflected towards the sensitive surface of the optical fingerprint sensitive layer 201 by the screen cover plate 10. When no finger is pressed on a surface of the screen cover plate 10, the amount of light received by each pixel 2011 on the sensitive surface is the same, which equals the preset amount of light. When a finger is pressed on the surface of the screen cover plate 10, the light is refracted by the uneven ridges and valleys on the surface of the finger at different angles and reflected back at different intensities, the pixels 2011 on the sensitive surface sense the variations of amount of light impinging on the corresponding positions, thus capturing the pattern of the fingerprint.

In summary, some embodiments in the present disclosure provide a display module, including: a screen cover plate, a fingerprint sensitive component, and a display component; the fingerprint sensitive component is arranged between the screen cover plate and the display component; the fingerprint sensitive component includes an optical fingerprint sensitive layer made of a transparent conductive material, and a sensitive surface of the optical fingerprint sensitive layer includes a plurality of pixels; the sensitive surface of the optical fingerprint sensitive layer is attached to a surface of the screen cover plate, the attaching surface of the optical fingerprint sensitive layer is attached to the display surface of the display component. When the display component is on, the light emitted by the display component passes through the fingerprint sensitive component towards the screen cover plate, part of the light is reflected to the sensitive surface of the optical fingerprint sensitive layer by a finger pressed on the screen cover plate. The fingerprint sensitive component derives the pattern of fingerprint by calculating based on a difference of the amount of light received by the pixels and a preset amount of light, therefore the requirement for full screen fingerprint identification on high screen-to-body ratio mobile terminal is met and user experience is improved.

Some embodiments of the present disclosure provide a fingerprint identification solution for a display module applied to an AMOLED display. Referring Fig. 3, the display component 30 includes: a first polarizer 301, an upper glass 302 and a lower glass 303. A surface of the first polarizer 301 is attached to the attaching surface of the optical fingerprint sensitive layer 201, the other surface of the first polarizer 301 is attached to a surface of the upper glass 302, the other surface of the upper glass 302 is attached to a surface of the lower glass 303, the upper glass 302 is used to protect the lower glass 303.

In the embodiments of the present disclosure, the first polarizer 301 is a type of polarizer, which is configured to filter natural light outside the mobile terminal to prevent the natural light from getting into the display component 30 to cause light interference that affects the operation of AMOLED displays. In addition, the upper glass 302 is made of encapsulation (ENCAP) glass and serves to protect the lower glass 303. The lower glass 303 is used to emit light and display images.

A conductive circuit and a light-emitting layer are electroplated on a surface of the lower glass 303. The conductive circuit is connected to the light-emitting layer. When the conductive circuit is turned on, the light-emitting layer emits light at the screen cover plate 10. A very thin conductive circuit and a light-emitting layer are electroplated on the surface of the lower glass 303 facing the upper glass 302. The light-emitting layer is made of an organic small-molecule material, and may emit light when powered to serve as a display light source.

Referring to Fig. 1, the display component 30 further includes a pre-pressed foam 304 which is arranged on the other surface of the lower glass 303. The pre-pressed foam 304 is made of an elastic buffer material with good cushioning effect, so as to protect the other surface of the lower glass 303 and prevent it from being damaged under external force.

Optionally, some embodiments, not forming part of the present invention, of the present disclosure provide a fingerprint identification solution for a display module applied to a TFT display. Referring to Fig. 4, the display component 30 includes a second polarizer 305, a color-filtering glass 306, a liquid crystal 307, a TFT glass 308, a third polarizer 309 and a backlight panel 310. The TFT glass 308 is configured to carry the liquid crystal 307; a surface of the second polarizer 305 is attached to the attaching surface of the optical fingerprint sensitive layer 201, the other surface of the second polarizer 305 is attached to a surface of the color-filtering glass 306, the other surface of the color-filtering glass 306 is attached to a surface of the TFT glass 308, the other surface of the TFT glass 308 is attached to a surface of the third polarizer 309, the other surface of the third polarizer 309 is attached to a light-emitting surface of the backlight panel 310.

The TFT glass 308 may include a plurality of TFTs, and each TFT is configured to carry part of the liquid crystal 307, such that each pixel of the liquid crystal 307 is driven by the TFT integrated behind the pixel. Therefore a TFT display is also a type of active matrix liquid crystal display device. The color-filtering glass 306 may provide three primary colors of red, green and blue and filter other colors to enable the rendition of different colors. The backlight panel 310 is configured to provide backlight and serve as the light source of the display component 30.

The polarization direction of the second polarizer 305 is perpendicular to that of the third polarizer 309. The third polarizer 309 is configured to rotate the polarization direction of the light emitted by the backlight plate 310 by 90 degrees. Having passed through the liquid crystal 307 in the TFT glass 308, the polarized light undergoes further changes in polarization direction. Then the polarization direction of the light is further rotated by 90 degrees by means of the second polarizer 305, thereby converting the natural light emitted by the backlight plate 310 into polarized light for display.

Optionally, referring to Fig.1 and Fig.4, the fingerprint sensitive component further includes: a flexible circuit board 202 and an optical fingerprint integrated circuit (IC) 203; an end of the flexible circuit board 202 is connected to the optical fingerprint sensitive layer 201, the other end of the flexible circuit board 202 is connected to the optical fingerprint integrated circuit 203.

In some embodiments, not forming part of the present disclosure, the flexible circuit board 202 is configured to transmit the fingerprint data collected by the optical fingerprint sensitive layer 201, while the optical fingerprint integrated circuit 203 is configured to process and match the fingerprint data, to determine whether the fingerprint data match with that in a preset fingerprint database.

Optionally, referring to Fig.1 and Fig.4, the display module further includes: a photoresist layer 50 arranged between the attaching surface of the optical fingerprint sensitive layer 201 and the display surface of the display component 30. The photoresist is an adhesive with good light transmittance and used to bond the fingerprint sensitive component 20 and the display component 30.

Optionally, the optical fingerprint sensitive layer 201 is made of transparent indium tin oxide (ITO). In chemistry, the indium tin oxide is a nanoscale metal oxide of indium and tin. The indium tin oxide has good conductivity and transparency, and can block harmful electron radiation, ultraviolet rays and far infrared rays. Therefore, ITO is usually sprayed on glass, plastic and electronic display screens to serve as a transparent conductive film while reducing the harmful electron radiation. Since the optical fingerprint sensitive layer 201 is made of transparent ITO, the conductivity of the optical fingerprint sensitive layer 201 can be guaranteed, and the light transmittance of the optical fingerprint sensitive layer 201 is improved.

Some embodiments of the present disclosure further provide a mobile terminal including the display module in the embodiments of the present disclosure. The mobile terminal may be a mobile terminal such as a mobile phone, or a tablet computer.

In summary, some embodiments in the present disclosure provide a display module and a mobile terminal. The display module includes a screen cover plate, a fingerprint sensitive component and a display component. The fingerprint sensitive component is arranged between the screen cover plate and the display component, the fingerprint sensitive component includes an optical fingerprint sensitive layer made of a transparent conductive material, and a sensitive surface of the optical fingerprint sensitive layer includes a plurality of pixels. The sensitive surface of the optical fingerprint sensitive layer is attached to a surface of the screen cover plate, and the attaching surface of the optical fingerprint sensitive layer is attached to the display surface of the display component. When the display component is on, the light emitted by the display component passes through the fingerprint sensitive component towards the screen cover plate, and part of the light is reflected to the sensitive surface of the optical fingerprint sensitive layer by the finger pressed on the screen cover plate. The fingerprint sensitive component derives the pattern of fingerprint by calculating based on a difference of the amount of light received by the pixels and a preset amount of light, therefore the requirement for full screen fingerprint identification on high screen-to-body ratio mobile terminal is met and user experience is improved.

## Claims

1. A display module applied to a mobile terminal, comprising:
a screen cover plate (10), a fingerprint sensitive component (20) and a display component (30); wherein,
the fingerprint sensitive component (20) is arranged between the screen cover plate (10) and the display component (30);
the fingerprint sensitive component (20) comprises an optical fingerprint sensitive layer (201) made of a transparent conductive material, and a sensitive surface of the optical fingerprint sensitive layer (201) comprises a plurality of pixels;
the sensitive surface of the optical fingerprint sensitive layer (201) is attached to a surface of the screen cover plate (10), and a attaching surface of the optical fingerprint sensitive layer (201) is attached to a display surface of the display component (30);
when the display component (30) is on, light emitted by the display component (30) passes through the fingerprint sensitive component (20) towards the screen cover plate (10), part of the light is reflected to the sensitive surface of the optical fingerprint sensitive layer (201) by a finger (40) pressed on the screen cover plate (10), and a pattern of a fingerprint is obtained according to an amount of light received by the pixels;
**characterized in that** the display component (30) comprises:
a first polarizer (301), an upper glass (302) and a lower glass (303),
a surface of the first polarizer (301) is attached to the attaching surface of the optical fingerprint sensitive layer (201), an other surface of the first polarizer (301) is attached to a surface of the upper glass (302), and an other surface of the upper glass (302) is attached to a surface of the lower glass (303);
wherein
the surface of the lower glass (303) is electroplated with a conductive circuit and a light-emitting layer;
the conductive circuit is connected to the light-emitting layer;
wherein the display component (30) further comprises:
a pre-pressed foam (304) arranged on an other surface of the lower glass (303).

2. The display module according to claim 1, wherein the fingerprint sensitive component (20) further comprises:
a flexible circuit board (202) and an optical fingerprint integrated circuit (203);
an end of the flexible circuit board (202) is connected to the optical fingerprint sensitive layer (201); an other end of the flexible circuit board (202) is connected to the optical fingerprint integrated circuit (203).

3. The display module according to claim 1, further comprising:
a photoresist layer (50), arranged between the attaching surface of the optical fingerprint sensitive layer (201) and the display surface of the display component (30).

4. The display module according to claim 1, wherein
the optical fingerprint sensitive layer (201) is made of transparent indium tin oxide.

5. A mobile terminal, **characterized by** comprising the display module according to any one of claims 1 to 4.

6. The mobile terminal according to claim 5, comprising a mobile phone or a tablet computer.

## Patentansprüche

1. Anzeigemodul, das auf ein mobiles Endgerät angewendet wird, umfassend:
eine Bildschirmabdeckplatte (10), eine fingerabdruckempfindliche Komponente (20) und eine Anzeigekomponente (30); wobei
die fingerabdruckempfindliche Komponente (20) zwischen der Bildschirmabdeckplatte (10) und der Anzeigekomponente (30) angeordnet ist;
die fingerabdruckempfindliche Komponente (20) eine optische fingerabdruckempfindliche Schicht (201) umfasst, die aus einem transparenten leitfähigen Material hergestellt ist, und eine empfindliche Oberfläche der optischen fingerabdruckempfindlichen Schicht (201) eine Vielzahl von Pixeln umfasst;
die empfindliche Oberfläche der optischen fingerabdruckempfindlichen Schicht (201) an einer Oberfläche der Bildschirmabdeckplatte (10) angebracht ist und eine Anbringungsoberfläche der optischen fingerabdruckempfindlichen Schicht (201) an einer Anzeigeoberfläche der Anzeigekomponente (30) angebracht ist;
wenn die Anzeigekomponente (30) eingeschaltet ist, läuft Licht, das von der Anzeigekomponente (30) emittiert wird, durch die fingerabdruckempfindliche Komponente (20) in Richtung der Bildschirmabdeckplatte (10), ein Teil des Lichts wird durch einen Finger (40), der auf die Bildschirmabdeckplatte (10) gedrückt wird, zu der empfindlichen Oberfläche der optischen fingerabdruckempfindlichen Schicht (201) reflektiert, und ein Muster eines Fingerabdrucks wird gemäß einer Lichtmenge erhalten, die von den Pixeln empfangen wird;
**dadurch gekennzeichnet, dass** die Anzeigekomponente (30) Folgendes umfasst:
einen ersten Polarisator (301), ein oberes Glas (302) und ein unteres Glas (303),
eine Oberfläche des ersten Polarisators (301) an der Anbringungsoberfläche der optischen fingerabdruckempfindlichen Schicht (201) angebracht ist, eine andere Oberfläche des ersten Polarisators (301) an einer Oberfläche des oberen Glases (302) angebracht ist und eine andere Oberfläche des oberen Glases (302) an einer Oberfläche des unteren Glases (303) angebracht ist;
wobei
die Oberfläche des unteren Glases (303) mit einer leitfähigen Schaltung und einer lichtemittierenden Schicht galvanisiert ist;
die leitfähige Schaltung mit der lichtemittierenden Schicht verbunden ist;
wobei die Anzeigekomponente (30) ferner umfasst:
einen vorgepressten Schaum (304), der auf einer anderen Oberfläche des unteren Glases (303) angeordnet ist.

2. Anzeigemodul nach Anspruch 1, wobei die fingerabdruckempfindliche Komponente (20) ferner umfasst:
eine flexible Leiterplatte (202) und eine integrierte optische Fingerabdruckschaltung (203);
ein Ende der flexiblen Leiterplatte (202) ist mit der optischen fingerabdruckempfindlichen Schicht (201) verbunden; ein anderes Ende der flexiblen Leiterplatte (202) ist mit der integrierten optischen Fingerabdruckschaltung (203) verbunden.

3. Anzeigemodul nach Anspruch 1, ferner umfassend:
eine Fotolackschicht (50), die zwischen der Anbringungsoberfläche der optischen fingerabdruckempfindlichen Schicht (201) und der Anzeigeoberfläche der Anzeigekomponente (30) angeordnet ist.

4. Anzeigemodul nach Anspruch 1, wobei
die optische fingerabdruckempfindliche Schicht (201) aus transparentem Indium-Zinn-Oxid besteht.

5. Mobiles Endgerät, **dadurch gekennzeichnet, dass** es das Anzeigemodul nach einem der Ansprüche 1 bis 4 umfasst.

6. Mobiles Endgerät nach Anspruch 5, umfassend ein Mobiltelefon oder einen Tablet-Computer.

## Revendications

1. Module d'affichage appliqué à un terminal mobile, comprenant :
une plaque de recouvrement d'écran (10), un composant sensible aux empreintes digitales (20) et un composant d'affichage (30) ; dans lequel
le composant sensible aux empreintes digitales (20) est disposé entre la plaque de recouvrement d'écran (10) et le composant d'affichage (30) ;
le composant sensible aux empreintes digitales (20) comprend une couche sensible aux empreintes digitales optiques (201) constituée d'un matériau conducteur transparent, et une surface sensible de la couche sensible aux empreintes digitales optiques (201) comprend une pluralité de pixels ;
la surface sensible de la couche sensible aux empreintes digitales optiques (201) est fixée à une surface de la plaque de recouvrement d'écran (10), et une surface de fixation de la couche sensible aux empreintes digitales optiques (201) est fixée à une surface d'affichage du composant d'affichage (30) ;
lorsque le composant d'affichage (30) est allumé, la lumière émise par le composant d'affichage (30) passe à travers le composant sensible aux empreintes digitales (20) vers la plaque de recouvrement d'écran (10), une partie de la lumière est réfléchie sur la surface sensible de la couche sensible aux empreintes digitales optiques (201) par un doigt (40) appuyé sur la plaque de recouvrement d'écran (10), et un motif d'une empreinte digitale est obtenu selon une quantité de lumière reçue par les pixels ;
**caractérisé en ce que** le composant d'affichage (30) comprend :
un premier polariseur (301), un verre supérieur (302) et un verre inférieur (303),
une surface du premier polariseur (301) est fixée à la surface de fixation de la couche sensible aux empreintes digitales optiques (201), une autre surface du premier polariseur (301) est fixée à une surface du verre supérieur (302), et une autre surface du verre supérieur (302) est fixée à une surface du verre inférieur (303) ;
dans lequel
la surface du verre inférieur (303) est à revêtement électrolytique ayant un circuit conducteur et une couche électroluminescente ;
le circuit conducteur est relié à la couche électroluminescente ;
dans lequel le composant d'affichage (30) comprend de plus :
une mousse pré-comprimée (304) disposée sur une autre surface du verre inférieur (303).

2. Module d'affichage selon la revendication 1, dans lequel le composant sensible aux empreintes digitales (20) comprend de plus :
une carte de circuit imprimé souple (202) et un circuit intégré pour empreintes digitales optiques (203) ;
une extrémité de la carte de circuit imprimé souple (202) est reliée à la couche sensible aux empreintes digitales optiques (201) ; une autre extrémité de la carte de circuit imprimé souple (202) est reliée au circuit intégré pour empreintes digitales optiques (203).

3. Module d'affichage selon la revendication 1, comprenant de plus :
une couche photorésistante (50), disposée entre la surface de fixation de la couche sensible aux empreintes digitales optiques (201) et la surface d'affichage du composant d'affichage (30).

4. Module d'affichage selon la revendication 1, dans lequel
la couche sensible aux empreintes digitales optiques (201) est constituée d'oxyde d'indium dopé à l'étain transparent.

5. Terminal mobile, **caractérisé en ce qu'**il comprend le module d'affichage selon l'une quelconque des revendications 1 à 4.

6. Terminal mobile selon la revendication 5, comprenant un téléphone mobile ou une tablette électronique.
